# EUROPEAN PATENT SPECIFICATION

(11) **EP 1 577 158 B1**
(45) Date of publication and mention of the grant of the patent: **09.09.2009**
(21) Application number: 04425188.2
(22) Date of filing: 17.03.2004
(51) Int. Cl.: B60N 2/70, B60N 2/64

(54) **Vehicle seat cushion, and method of forming such a cushion**
Fahrzeugsitzkissen, und Herstellungsverfahren
Coussin de siège de véhicule, et procédé de formation d'un tel coussin

(43) Date of publication of application: 21.09.2005
(73) Proprietor: C.R.F. Società Consortile per Azioni, 10043 Orbassano (Torino) (IT)
(72) Inventor: Masoero, Giorgio, c/o C.R.F.Società Consortile per Azioni, 10043 Orbassano (IT)
(74) Representative: Jorio, Paolo

(56) References cited:
- EP-A- 0 464 007
- WO-A-99/33380
- DE-A- 2 039 121
- DE-A- 10 148 662
- DE-A- 19 850 226
- US-A- 2 970 638
- US-A- 3 145 054
- US-A- 3 503 649
- US-A- 3 749 442
- US-A- 4 718 727
- US-A- 5 877 436

## Description

The present invention relates to a vehicle seat cushion, and to a relevant method of forming said seat cushion.

For maximum comfort of vehicle seats, cushions or padding are used, both on the backrests and seat portions of the seats, which are relatively thick perpendicularly to the supporting surface, so as to absorb stress in the supporting surface contact regions and attenuate as far as possible any aching feeling caused by contact pressure distribution peaks, particularly over relatively long journeys.

The cushions of known seats of the above type are unsatisfactory by being relatively bulky, and, particularly as regards the seat portions, by occupying practically all the space between the floor of the vehicle and the user seating surface.

The US-A-4 718 727 discloses a removable and reversible seat supplement for any kind of chairs, which includes a seat cushion and/or backrest, generally concave on one side and convex on the other side. The seat supplement presents intermediate areas having on one side a projection with height increasing stepwise, and on the opposite side a depression with a depth increasing complementary. The seat supplement can be reversed by the user according to its size or builds.

The US-A-3 749 442 discloses another seat assembly having a removable or portable base adapted to be mounted on a chair or like. The assembly comprises also two complementary seat elements supported thereon for individual yieldingly universal tilting movement to accommodate to different positions of a user's body. The seat elements have recesses or apertures for receiving the ischial tuberosity bones of the user, and the back of the seat has a localized recess for partial reception of the lumbar portion of the user's backbone.

It is an object of the present invention to provide a vehicle seat with cushions which are both ergonomic and provides for solving the above problem in a straightforward, low-cost manner.

According to the present invention, there are According to the present invention, there are provided a method of forming a vehicle seat cushion and a vehicle seat cushion as defined in claims 1 and 10, respectively.

A non-limiting embodiment of the present invention will be described by way of example with reference to the accompanying drawings, in which:
Figure 1 shows a view in perspective of two preferred embodiments of the vehicle seat cushion according to the present invention;
Figure 2 shows a side view of a manikin used to implement a preferred method of forming the seat cushion according to the present invention;
Figure 3 shows a plan view of a schematic map of the contact pressures of the Figure 2 manikin on a reference plane;
Figures 4 to 7 show sections along planes IV-IV, V-V, VI-VI and VII-VII respectively in Figure 1;
Figures 8 to 11 shows sections along planes VIII-VIII, IX-IX, X-X and XI-XI respectively in Figure 1.

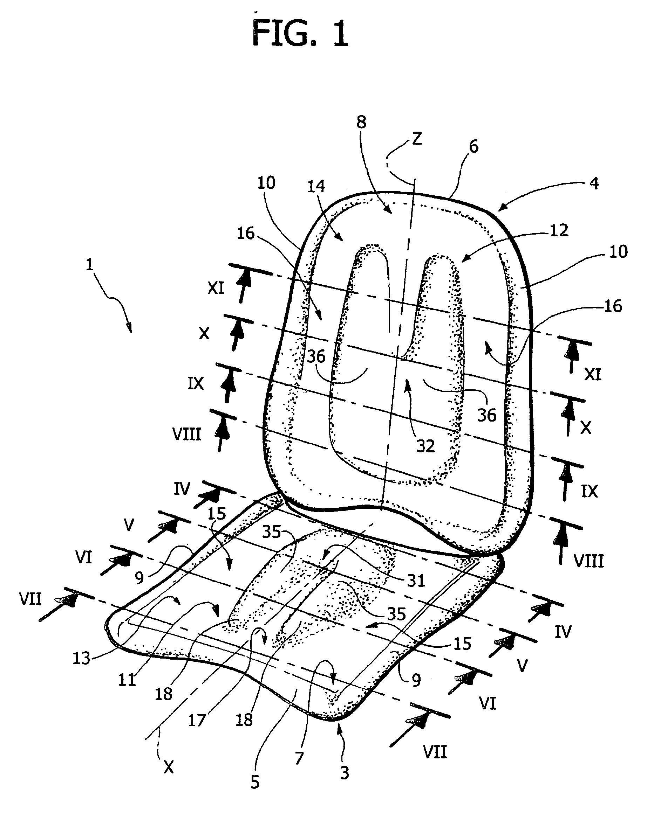

Number 1 in Figure 1 indicates as a whole a seat (shown partly) of a vehicle (not shown). In the following description, the terms "forwards", "rearwards", "front", "rear", "bottom", "top", "side", "horizontal", "vertical", etc.. are used with reference to the normal accommodation position of the driver or passengers of the vehicle (as shown in Figure 1), and with reference to the longitudinal travelling direction of the vehicle.

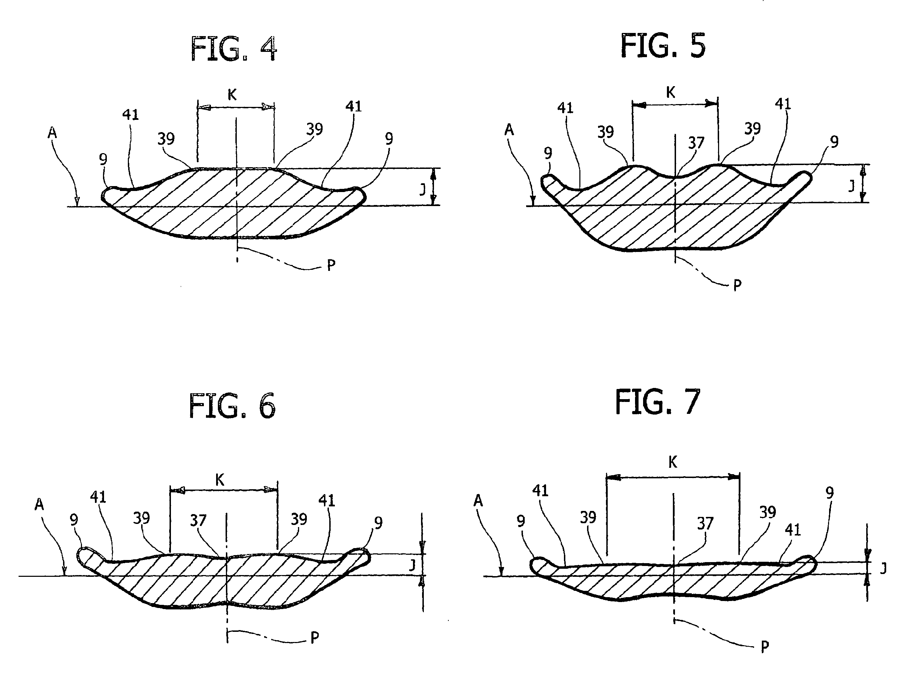

Seat 1 comprises a seat portion 3 and a backrest 4, which in turn comprise respective cushions 5, 6 fitted to respective frames (not shown). Cushions 5, 6 have a vertical plane P of symmetry (Figures 4 to 11) parallel to the longitudinal travelling direction of the vehicle, comprise upholstered padding made of foam material, and define respective surfaces 7, 8 facing the user, in use, and terminating laterally with respective edges 9, 10, which project upwards and forwards respectively to laterally retain the user as the vehicle is moving.

Surfaces 7, 8 are shaped symmetrically with respect to plane P, and comprise respective intermediate areas 11, 12 coincident with the regions in which roughly 70% of the weight of the user's body is discharged in use; and respective peripheral areas 13, 14, which are adjacent to areas 11, 12, are subjected, in use, to the remaining 30% of the user's weight, and comprise respective lateral regions 15, 16 connected to edges 9, 10. More specifically, area 13 also comprises a central region 17 interposed between two front end branches 18 of area 11, which correspond to the regions contacting the user's legs.

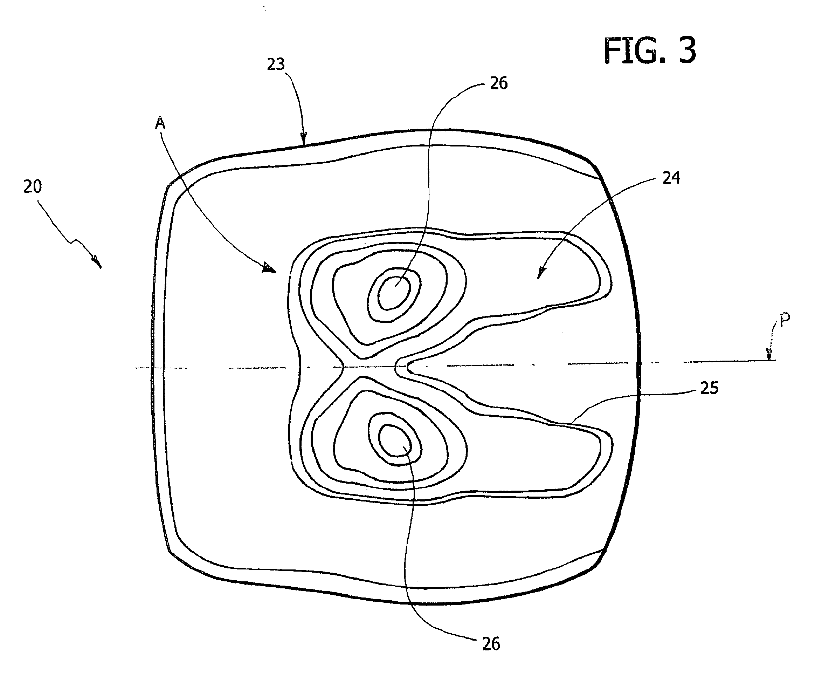

According to the present invention, areas 11, 12 project with respect to areas 13, 14, and are preferably shaped according to the following method from the shape of a standard reference seat 20, of which a plan view of the seat portion 23 only is shown in Figure 3.

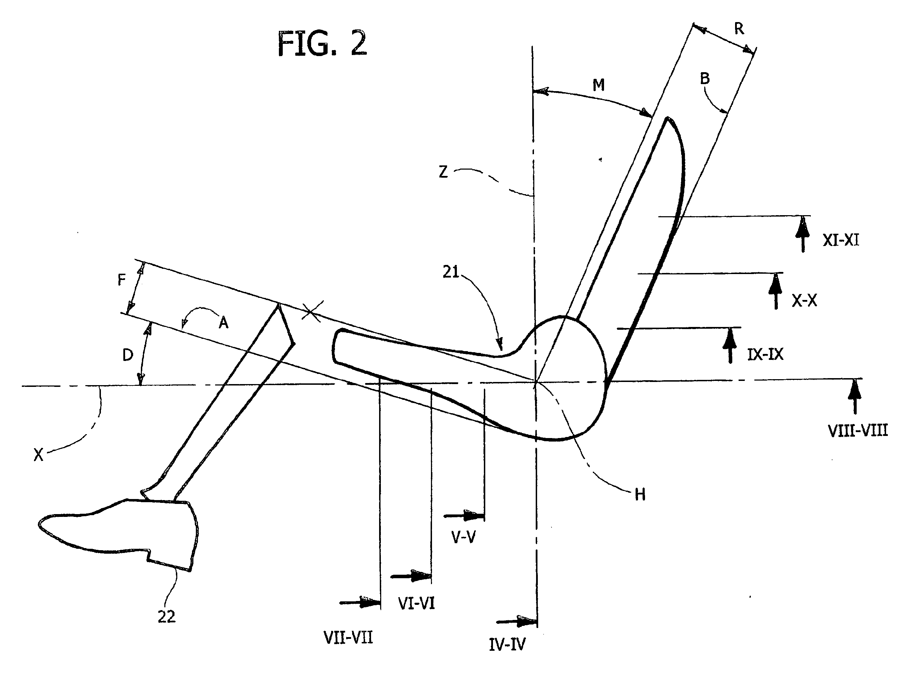

With reference to Figure 2, the seat portion and backrest of reference seat 20 comprise respective supporting planes A and B, which are perpendicular to the plane P of symmetry of the seat, and are defined using as an anthropometric reference the body of a manikin, indicated 21 in Figure 2, as specified in SAE Standard J826b of January 1974, and classified 95 percentile (i.e. at the top end, in terms of anthropometric dimensions, of 95% of the population).

More specifically, selecting as a reference point a point H coincident with the pivot between the legs and hip of manikin 21 in the seated position, plane A slopes upwards and forwards by an angle D of 15° to 25° with respect to a horizontal axis X lying in plane P, and is located at a distance F of 100 millimetres from point H. More specifically, the selected angle D is inversely proportional to the vertical distance, measured as specified in SAE Standard J1100 of June 1984 and not shown in Figure 2, between point H and the heel 22 of manikin 21.

Plane B, on the other hand, slopes upwards and rearwards by an angle M of 25° with respect to a vertical axis Z lying in plane P, and is located at a distance R of 130 millimetres from point H.

Once reference seat 20 is defined, a contact pressure distribution is determined at the design stage as a reference to establish the relief of areas 11, 12 with respect to planes A, B.

The contact pressure distribution may be determined by applying a load equal to that of a user's body in the seated position and resting on planes A and B, e.g. by means of manikin 21, and then determining the contact pressures; or may be determined by determining the contact pressures on planes A and B of a sample group of users, and then calculating an average of the findings; or may be determined theoretically on the basis of desired user comfort considerations.

Once the pressure distribution is determined, a quantity of padding material, to a height depending on the contact pressure findings, is added to planes A and B, i.e. to conventional reference seat 20.

More specifically, the height of the padding material on planes A and B is directly proportional to the contact pressure findings, with a proportionality constant selected as a function of the stiffness of the padding material, and of the desired pressure level on seat 1, i.e. depending on whether "racing" or "comfort" performance is intended. For example, for a tested padding material of flexible polyurethane foam, a proportionality constant of roughly 0.5 g/cm2/mm is preferably selected.

Number 23 in Figure 3 indicates the seat portion of reference seat 20, on which is shown an example of the distribution of contact pressure levels that can be determined on plane A. Contact with manikin 21 mostly occurs in a U-shaped region 24 defined by a perimeter 25, outside which contact pressure is relatively low; and pressure increases gradually towards two intermediate areas 26 symmetrical with respect to plane P and corresponding to the regions supporting the ischial tuberosities of the manikin.

By virtue of the method described above, since region 24 coincides, in plan view, with area 11 of seat 1, the outer profile of area 11 rises gradually to two tips (Figure 1), corresponding to areas 26, in proportion to the pressure determined.

In the preferred embodiment shown (Figures 4 to 8), padding material is also added on plane A outside perimeter 25 in proportion to the pressure determined, so that peripheral area 13 does not coincide with plane A.

The contact pressure distribution on plane B of the backrest of the reference seat (not shown) is similar to that of seat portion 23, so the formation of area 12 is not discussed in detail.

Figures 4 to 11 show sections illustrating in more detail the shape of cushions 5, 6. More specifically, Figure 4 shows a section of seat portion 3 along a plane IV-IV (see also Figure 2) perpendicular to the X axis and defining a plane containing point H; and Figures 5 to 7 show sections along planes V-V, VI-VI and VII-VII, also perpendicular to the X axis and separated forwards from plane IV-IV by 100, 200 and 300 millimetres respectively.

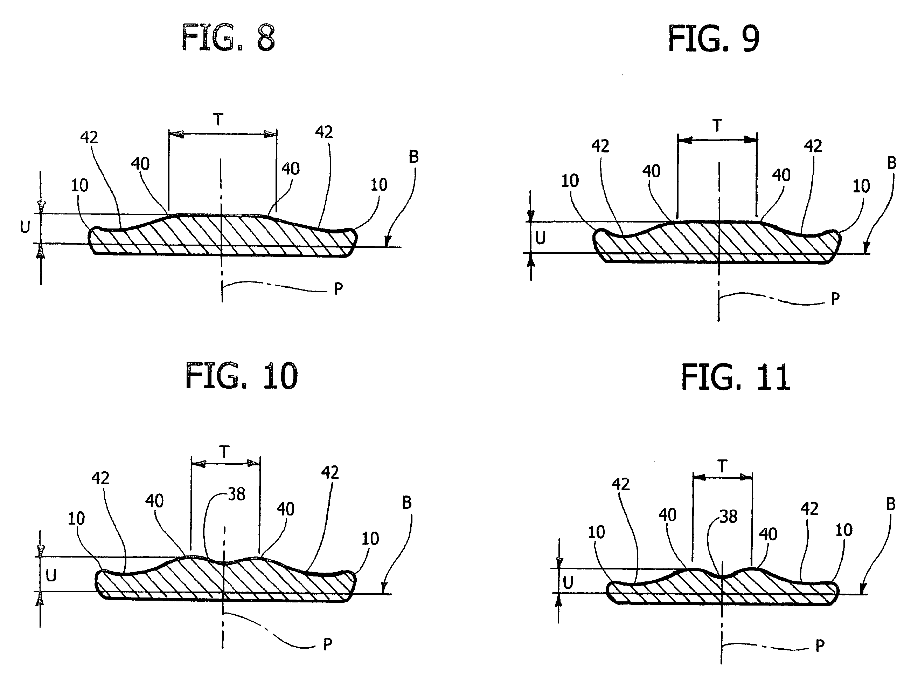

Similarly, Figure 8 shows a section of backrest 4 along a plane VIII-VIII perpendicular to the Z axis and defining a plane containing point H; and Figures 9 to 11 show sections along planes IX-IX, X-X and XI-XI, also perpendicular to the Z axis and separated upwards from plane VIII-VIII by 100, 200 and 300 millimetres respectively.

With reference to Figure 1, surfaces 7, 8 comprise respective central depressions 31, 32 located at plane P, elongated along plane P, and separating respective pairs of lateral portions 35, 36 of areas 11, 12, and therefore said tips.

If surfaces 7, 8 are sectioned in planes perpendicular to plane P and intersecting depressions 31, 32, in particular along said planes V-V, VI-VI, X-X and XI-XI, the outer profiles of surfaces 7, 8 comprise: respective concave central portions 37, 38 defining depressions 31, 32; respective pairs of convex lateral portions 39, 40 connected to portions 37, 38, located on opposite sides of relative depression 31, 32, and defining portions 35, 36; and respective pairs of concave lateral portions 41, 42 connected to portions 39, 40 and defining regions 15, 16 of areas 13, 14.

The peaks of portions 39 are separated by a distance K ranging between 120 and 225 millimetres, and are separated from plane A by a distance J ranging between 0 and 100 millimetres, depending on the position of the section plane along the X axis.

The peaks of portions 40 are separated by a distance T ranging between 100 and 200 millimetres, and are separated from plane B by a distance U ranging between 0 and 60 millimetres, depending on the position of the section plane along the Z axis.

Areas 11, 13 of seat 1, being in relief, are therefore shaped to ergonomically support the user. More specifically, as compared with a conventional reference seat 20, seat 1 has padding material on planes A and B, which means the amount of padding material in the bottom portion of seat portion 3 and in the rear portion of backrest 4 may be reduced to reduce the size of the seat.

Areas 11 and 12 are relatively easy to shape, by simply determining the contact pressure distributions at the design stage - either on the basis of test measurements using a manikin, or using a sample group of users, or theoretically - and by applying straightforward calculations to calculate the amount of padding material to be added on planes A and B, and therefore the profile of areas 11, 12.

Clearly, changes may be made to cushions 5, 6 as described herein if not thereby departing from the scope of the present invention, which is defined in the claims.

## Claims

1. A method of forming a vehicle seat cushion (5, 6), the seat cushion having a supporting surface (7, 8) comprising:
- an intermediate area (11, 12), on which most of the weight of the user's body is discharged in use; and
- a peripheral area (13, 14) adjacent to said intermediate area (11, 12), and on which the rest of the weight of the user's body is discharged in use;
said intermediate area (11, 12) projecting with respect to said peripheral area (13, 14);
the method being **characterized by** comprising the steps of:
- defining a reference plane (A, B) perpendicular to a vertical plane of symmetry (P) of the cushion (5, 6);
- determining a distribution of contact pressures on said reference plane (A, B) by a body in a seated position and resting on said reference plane (A, B); and
- providing a quantity of padding material on said reference plane (A, B), to a height depending on the determined contact pressures.

2. A method as claimed in Claim 1, **characterized in that** the height of the padding material provided on said reference plane (A, B) is directly proportional to the contact pressures determined.

3. A method as claimed in Claim 2, **characterized in that** the proportionality constant between said height and said contact pressures is selected as a function of the stiffness of the padding material.

4. A method as claimed in any one of Claims 1 to 3, **characterized in that** said distribution of contact pressures is determined by loading a manikin (21) on said reference plane (A, B) with a load equal to that exerted in use by a user, and by determining said contact pressures.

5. A method as claimed in any one of Claims 1 to 3, **characterized in that** said distribution of contact pressures is determined by determining the contact pressures on the reference plane (A, B) of a sample group of users, and calculating an average of the findings.

6. A method as claimed in any one of Claims 1 to 3, **characterized in that** said distribution of contact pressures is determined theoretically on the basis of the comfort desired.

7. A method as claimed in any one of Claims 1 to 6, **characterized in that** the step of defining said reference plane (A, B) comprises the operations of:
- defining a reference body (21);
- selecting a reference point (H) on the reference body (21) in a seated position; and
- positioning said reference plane (A, B) on a tilt (D, M) and at a predetermined distance (F, R) with respect to the selected said reference point (H).

8. A method as claimed in Claim 7, **characterized in that** said reference point (H) is selected at the pivot between the hip and legs of a standard reference manikin (21).

9. A method as claimed in Claim 8, **characterized in that**, when forming a cushion (5) of a seat portion (3), the reference plane (A) slopes upwards and forwards by an angle (D) of 15° to 25° with respect to a horizontal axis (X), and is located at a distance (F) of 100 millimetres from said reference point (H); and, when forming a cushion (6) of a backrest (4), the reference plane (B) slopes upwards and rearwards by an angle (M) of 25° with respect to a vertical axis (Z), and is located at a distance (R) of 130 millimetres from said reference point (H).

10. A vehicle seat cushion (5, 6) **characterised by** being formed according to the method of anyone of the preceding claims; said intermediate area (11,12) comprising peak areas (26) corresponding to the peaks of the determined contact pressures; and the projection of said intermediate area (11,12) increasing continuously towards said peak areas (26).

11. A cushion as claimed in Claim 10, **characterised by** comprising a vertical plane of symmetry (P); and in that said supporting surface (7, 8) comprises a central depression (31, 32) at said vertical plane of symmetry (P).

12. A cushion as claimed in Claim 11, **characterized in that** said central depression (31, 32) is elongated along said vertical plane of symmetry (P); said intermediate area (11, 12) comprising two projecting lateral portions (35, 36) separated by said central depression (31, 32).

13. A cushion as claimed in Claim 12, **characterized in that**, by sectioning said supporting surface (7, 8) along section planes perpendicular to said vertical plane of symmetry (P) and intersecting said central depression (31, 32), the outer profile of said supporting surface comprises:
- a concave central portion (37, 38) defining said central depression (31, 32);
- a pair of convex lateral portions (39, 40) connected to said concave central portion (37, 38), located on opposite sides of said central depression (31, 32), and defining said projecting lateral portions (35, 36); and
- a pair of concave lateral portions (41, 42) connected to said convex lateral portions (39, 40), and defining respective lateral regions (15, 16) of said peripheral area (13, 14).

14. A cushion as claimed in Claim 13, **characterized by** being suitable for a seat portion (3) of said seat (1) ; and in that the distance between the peak areas of said convex lateral portions (39) ranges between 120 and 225 millimetres, depending on the location of said section planes.

15. A cushion as claimed in Claim 13, **characterized by** being suitable for a backrest (4) of said seat (1); and in that the distance between the peak areas of said convex lateral portions (40) ranges between 100 and 200 millimetres, depending on the location of said section planes.

16. A cushion as claimed in Claim 15, **characterized in that** said peak areas are of a height ranging between 0 and 60 millimetres with respect to a first ideal reference plane (B) perpendicular to said vertical plane of symmetry (P); said first ideal reference plane (B) sloping upwards and rearwards by an angle (M) of 25° with respect to a vertical axis (Z), and being located at a distance (R) of 130 millimetres from the pivot (H) between the hip and legs of a reference body (21) in a seated position.

17. A cushion as claimed in Claim 14, **characterized in that** said peak areas are of a height ranging between 0 and 100 millimetres with respect to a second ideal reference plane (A) perpendicular to said vertical plane of symmetry (P); said second ideal reference plane (A) sloping upwards and forwards by an angle (D) of 15° to 25° with respect to a horizontal axis (X), and being located at a distance (F) of 100 millimetres from the pivot (H) between the hip and legs of a reference body (21) in a seated position.

## Patentansprüche

1. Verfahren zum Bilden eines Fahrzeugsitzkissens (5, 6), wobei das Sitzkissen eine Stützfläche (7, 8) aufweist, umfassend:
- Einen Mittelbereich (11, 12), an dem ein Großteil des Gewichtes des Körpers des Benützers bei Verwendung ruht;
- Einen peripheren Bereich (13, 14) benachbart zu dem Mittelbereich (11, 12), und an welchem der Rest des Gewichtes des Körpers des Benutzers bei Verwendung ruht;
wobei der Mittelbereich (11, 12) mit Bezug auf den peripheren Bereich (13, 14) vorspringt;
wobei das Verfahren **dadurch gekennzeichnet ist, dass** es die Schritte umfasst:
- Definieren einer Referenzebene (A, B), senkrecht zur vertikalen Symmetrieebene (P) des Kissens (5, 6);
- Bestimmen einer Verteilung von Kontaktdrücken an der Referenzebene (A, B) durch einen Körper in einer sitzenden Position und ruhend an der Referenzebene (A, B);
- Bereitstellen einer Menge an Polsterungsmaterial an der Referenzebene (A, B) auf eine Höhe, die abhängig ist von den bestimmten Kontaktdrücken.

2. Verfahren nach Anspruch 1, **dadurch gekennzeichnet, dass** die Höhe des Polsterungsmaterials, welches an der Referenzebene (A, B) bereitgestellt wird direkt proportional zu den bestimmten Kontaktdrücken ist.

3. Verfahren nach Anspruch 2, **dadurch gekennzeichnet, dass** die Proportionalitätskonstante zwischen der Höhe und den Kontaktdrücken gewählt ist als eine Funktion der Steife des Polsterungsmaterials.

4. Verfahren nach einem der Ansprüche 1 bis 3, **dadurch gekennzeichnet, dass** die Verteilung der Kontaktdrücke bestimmt wird durch die Positionierung eines Dummies (21) an der Referenzebene (A, B), mit einer Last gleich zu jener die bei Verwendung durch einen Benutzer ausgeübt wird, mittels Bestimmung der Kontaktdrücke.

5. Verfahren nach einem der Ansprüche 1 bis 3, **dadurch gekennzeichnet, dass** die Verteilung von Kontaktdrücken bestimmt wird durch bestimmen der Kontaktdrücke an der Referenzebene (A, B) einer Benutzerprobengruppe und durch errechnen eines Durchschnittes der Ermittlungen.

6. Verfahren nach einem der Ansprüche 1 bis 3, **dadurch gekennzeichnet, dass** die Verteilung von Kontaktdrücken theoretisch bestimmt wird basierend auf gewünschtem Komfort.

7. Verfahren nach einem der Ansprüche 1 bis 6, **dadurch gekennzeichnet, dass** der Schritt des Definierens der Referenzebene (A, B) Handlungen umfasst von:
- Definieren eines Referenzkörpers (21);
- Auswählen eines Referenzpunktes (H) an dem Referenzkörper (21) in einer sitzenden Positionierung;
- Positionieren der Referenzebene (A, B) bei einer Neigung (D, M) und einem vorbestimmten Abstand (F, R) mit Bezug auf den ausgewählten Referenzpunkt (H).

8. Verfahren nach Anspruch 7, **dadurch gekennzeichnet, dass** der Referenzpunkt (H) ausgewählt ist am Gelenk zwischen der Hüfte und den Beinen eines Standardreferenzdummies (21).

9. Verfahren nach Anspruch 8, **dadurch gekennzeichnet, dass** beim Ausbilden eines Kissens (5) eines Sitzabschnittes (3) die Referenzebene (A) aufwärtig und vorwärtig geneigt vorliegt bei einem Winkel (D) von 15° bis 25° mit Bezug auf eine Horizontalachse (X) und befindlich ist bei einem Abstand (F) von 100 Millimetern bezüglich des Referenzpunktes (H); und beim bilden eines Kissens (6) einer Rückenlehne (4) die Referenzebene (D) aufwärtig und rückwärtig geneigt ist um einen Winkel (M) von 25° mit Bezug auf eine vertikal Achse (Z), und befindlich ist bei einem Abstand (R) von 130 Millimetern mit Bezug auf den Referenzpunkt (H).

10. Fahrzeugsitzkissen (5, 6), **gekennzeichnet durch** die Ausbildung gemäß dem Verfahren nach einem der vorangegangenen Ansprüche, wobei der Mittelbereich (11, 12) Scheitelbereiche (26) umfasst, entsprechend den Scheiteln der bestimmten Kontaktdrücke; wobei das vorspringen des Mittelbereiches (11, 12) kontinuierlich hin zu den Scheitelbereichen (26) zunimmt.

11. Kissen nach Anspruch 10, **dadurch gekennzeichnet, dass** es eine vertikale Symmetrieebene (P) umfasst; und dadurch, dass die Stützfläche (7, 8) eine mittlere Absenkung (31, 32) an der vertikalen Symmetrieebene (P) umfasst.

12. Kissen nach Anspruch 11, **dadurch gekennzeichnet, dass** die mittlere Absenkung (31, 32) länglich entlang der vertikalen Symmetrieebene (P) ist; wobei der Mittelbereich (11, 12) zwei vorspringende Lateralabschnitte (35, 36) umfasst, separiert durch die mittlere Absenkung (31, 32).

13. Kissen nach Anspruch 12, **dadurch gekennzeichnet, dass** mittels Sektionierung der Stützfläche (7, 8) entlang Schnittebenen senkrecht zur vertikalen Symmetrieebene (P) und die mittlere Absenkung (31, 32) schneidend das äußere Profil der Stützfläche umfasst:
- einen konkaven Mittelabschnitt (37, 38), die mittlere Absenkung (31, 32) definierend;
- ein Paar von konvexen Lateralabschnitten (39, 40), verbunden bezüglich des konkaven Mittelabschnittes (37, 38), befindlich an entgegengesetzten Seiten der mittleren Absenkung (31, 32) und die vorspringenden Lateralabschnitte (35, 36) definierend;
- ein Paar von konkaven Lateralabschnitten (41, 42), verbunden bezüglich der konvexen Lateralabschnitte (39, 40), und jeweils Lateralabschnitte (15, 16) des peripheren Bereiches (13, 14) definierend.

14. Kissen nach Anspruch 13, **dadurch gekennzeichnet, dass** es geeignet ist für einen Sitzabschnitt (3) des Sitzes (1); und dadurch, dass der Abstand zwischen den Scheitelbereichen der konvexen Lateralabschnitte (39) in einen Bereich liegt zwischen 120 und 225 Millimetern, und zwar abhängig von dem Ort der Schnittebenen.

15. Kissen nach Anspruch 13, **dadurch gekennzeichnet, dass** es geeignet ist für eine Rückenlehne (4) des Sitzes (1); und dadurch, dass die Entfernung zwischen Scheitelbereichen der konvexen Lateralabschnitte (40) in einem Bereich liegt zwischen 100 und 200 Millimetern, und zwar abhängig von dem Ort der Schnittebenen.

16. Kissen nach Anspruch 15, **dadurch gekennzeichnet, dass** die Scheitelbereiche bei einer Höhe vorliegen in einem Bereich zwischen 0 und 60 Millimetern mit Bezug auf eine erste Idealreferenzebene (B), senkrecht vorliegend bezüglich der vertikalen Symmetrieebene (P); wobei die erste Idealreferenzebene (B) aufwärtig und rückwärtig geneigt ist um einen Winkel (M) von 25° mit Bezug auf eine Vertikalachse (Z), und befindlich ist bei einem Abstand (R) von 130 Millimeter mit Bezug auf das Gelenk (H) zwischen der Hüfte und den Beinen eines Referenzkörpers (21) in einer sitzenden Position.

17. Kissen nach Anspruch 14, **dadurch gekennzeichnet, dass** die Scheitelbereiche bei einer Höhe vorliegen in einem Bereich zwischen 0 und 100 mm mit Bezug auf eine zweite Idealreferenzebene (A), senkrecht vorliegend bezüglich der vertikalen Symmetrieebene (P); wobei die zweite Idealreferenzebene (A) aufwärtig und vorwärtig geneigt ist um einen Winkel (D) von 15° bis 25° mit Bezug auf eine Horizontalachse (X), und befindlich ist bei einer Entfernung oder einem Abstand (F) von 100 Millimeter bezüglich dem Gelenk (H) zwischen der Hüfte und den Beinen eines Referenzkörpers (21) in einer sitzenden Position oder Positionierung.

## Revendications

1. Procédé de formation d'un coussin de siège de véhicule (5, 6), le coussin de siège présentant une surface de support (7, 8) qui comprend :
- une zone intermédiaire (11, 12), sur laquelle repose en service la majeure partie du poids du corps d'un usager ; et
- une zone périphérique (13, 14) adjacente à ladite zone intermédiaire (11, 12), et sur laquelle repose en service le reste du poids du corps d'un usager ;
ladite zone intermédiaire (11, 12) faisant saillie par rapport à ladite zone périphérique (13, 14) ;
le procédé étant **caractérisé par** les étapes consistant à :
- définir un plan de référence (A, B) perpendiculaire à un plan de symétrie vertical (P) du coussin (5, 6) ;
- déterminer une distribution des pressions de contact sur ledit plan de référence (A, B) exercées par un corps dans une position assise et qui repose sur ledit plan de référence (A, B) ; et
- fournir une quantité de matériau de rembourrage sur ledit plan de référence (A, B), à une hauteur qui dépend des pressions de contact déterminées.

2. Procédé selon la revendication 1, **caractérisé en ce que** la hauteur du matériau de rembourrage fourni sur ledit plan de référence (A, B) est directement proportionnelle aux pressions de contact déterminées.

3. Procédé selon la revendication 2, **caractérisé en ce que** la constante de proportionnalité ante entre ladite hauteur et lesdites pressions de contact, est sélectionnée en fonction de la dureté du matériau de rembourrage.

4. Procédé selon l'une quelconque des revendications 1 à 3, **caractérisé en ce que** ladite distribution des pressions de contact est déterminée en chargeant un mannequin (21) sur ledit plan de référence (A, B) avec une charge égale à celle exercée en service par un usager, et en déterminant lesdites pressions de contact.

5. Procédé selon l'une quelconque des revendications 1 à 3, **caractérisé en ce que** ladite distribution des pressions de contact est déterminée en déterminant les pressions de contact sur le plan de référence (A, B) exercées par un groupe témoin d'usagers, et en calculant une moyenne des résultats.

6. Procédé selon l'une quelconque des revendications 1 3, **caractérisé en ce que** ladite distribution des pressions de contact est déterminée de manière théorique sur la base du confort désiré.

7. Procédé selon l'une quelconque des revendications 1 à 6, **caractérisé en ce que** ladite étape consistant à définir ledit plan de référence (A, B) comprend les étapes consistant à :
- définir un corps de référence (21) ;
- sélectionner un point de référence (H) situé sur le corps de référence (21) dans une position assise ; et
- positionner ledit plan de référence (A, B) selon une inclinaison (D, M) et à une distance prédéterminée (F, R) par rapport audit point de référence sélectionné (H).

8. Procédé selon la revendication 7, **caractérisé en ce que** ledit point de référence (H) est sélectionné au niveau du pivot entre la hanche et les jambes d'un mannequin de référence standard (21).

9. Procédé selon la revendication 8, **caractérisé en ce que**, lors de la formation d'un coussin (5) d'une partie de siège (3), le plan de référence (A) est en pente vers le haut et vers l'avant selon un angle (D) compris entre 15° et 25° par rapport à un axe horizontal (X), et se situe à une distance (F) de 100 mm à partir dudit point de référence (H) ; et, lors de la formation d'un coussin (6) d'un dossier (4), le plan de référence (B) et en pente vers le haut et vers l'arrière selon un angle (M) de 25° par rapport à un axe vertical (Z), et se situe à une distance (R) de 130 mm à partir dudit point de référence (H).

10. Coussin de siège de véhicule (5, 6) **caractérisé en ce qu'**il est formé selon le procédé selon l'une quelconque des revendications précédentes ; ladite zone intermédiaire (11, 12) comprend des zones de pic (26) qui correspondent aux pics des pressions de contact déterminées ; et la saillie de ladite zone intermédiaire (11, 12) augmente de manière continue vers lesdites zones de pic (26).

11. Coussin selon la revendication 10, **caractérisé en ce qu'**il comprend un plan de symétrie vertical (P) ; et **en ce que** ladite surface de support (7, 8) comprend une dépression centrale (31, 32) au niveau dudit plan de symétrie vertical (P).

12. Coussin selon la revendication 11, **caractérisé en ce que** ladite dépression centrale (31, 32) est allongée le long dudit plan de symétrie vertical (P) ; ladite zone intermédiaire (11, 12) comprenant deux parties latérales qui font saillie (35, 36) séparées par ladite dépression centrale (31, 32).

13. Coussin selon la revendication 12, **caractérisé en ce que**, en faisant une section de ladite surface de support (7, 8) le long de plans de section perpendiculaires audit plan de symétrie vertical (P) et en coupant ladite dépression centrale (31, 32), le profil extérieur de ladite surface de support comprend :
- une partie centrale concave (37, 38) qui définit ladite dépression centrale (31, 32) ;
- une paire de parties latérales convexes (39, 40) reliées à ladite partie centrale concave (37, 38), situées sur des côtés opposés de ladite dépression centrale (31, 32), et définissant les dites parties latérales qui font saillie (35, 36) ; et
- une paire de parties latérales concaves (41, 42) reliées auxdites partie latérales convexes (39, 40), et définissant des régions latérales respectives (15, 16) de ladite zone périphérique (13, 14).

14. Coussin selon la revendication 13, **caractérisé en ce qu'**il est adapté à une partie de siège (3) dudit siège (1) ; et **en ce que** la distance entre les zones de pic desdites parties latérales convexes (39), se situe dans une plage comprise entre 120 mm et 225 mm, selon l'emplacement desdits plans de section.

15. Coussin selon la revendication 13, **caractérisé en ce qu'**il est adapté à un dossier (4) dudit siège (1) ; et **en ce que** la distance entre les zones de pic desdites parties latérales convexes (40), se situe dans une plage comprise entre 100 mm et 200 mm, selon l'emplacement desdits plans de section.

16. Coussin selon la revendication 15, **caractérisé en ce que** lesdites zones de pic présentent une hauteur qui est comprise entre 0 et 60 mm par rapport à un premier plan de référence idéal (B) perpendiculaire audit plan de symétrie vertical (P) ; ledit premier plan de référence idéal (B) étant en pente vers le haut et vers l'arrière selon un angle (M) de 25° par rapport à un axe vertical (Z), et étant situé à une distance (R) de 130 mm à partir du pivot (H) entre la hanche et les jambes d'un corps de référence (21) dans une position assise.

17. Coussin selon la revendication 14, **caractérisé en ce que** les dites zones de pic présentent une hauteur qui est comprise entre 0 et 100 mm par rapport à un second plan de référence idéal (A) perpendiculaire audit plan de symétrie vertical (P) ; ledit second plan de référence idéal (A) étant en pente vers le haut et vers l'avant selon un angle (D) compris entre 15° et 25° par rapport à un axe horizontal (X), et étant situé à une distance (F) de 100 mm à partir du pivot (H) entre la hanche et les jambes d'un corps de référence (21) dans une position assise.
